# EUROPEAN PATENT APPLICATION

(11) **EP 4 844 479 A1**
(43) Date of publication of application: **25.11.2026**
(21) Application number: 25178120.9
(22) Date of filing: 22.05.2025
(51) Int. Cl.: G02F 1/35, H01S 3/00

(54) **OPTICAL ASSEMBLY AND METHOD FOR GENERATING A FLAT OUTPUT OPTICAL FREQUENCY COMB**

(71) Applicant: Menlo Systems GmbH, 82152 Martinsried (DE)
(72) Inventor: STEINMETZ, Tilo, 80797 München (DE); WU, Yuanjie, 81241 München (DE); FERSCH, Daniel, 82110 Germering (DE); HOLZWARTH, Ronald, 82194 Gröbenzell (DE)
(74) Representative: Grünecker Patent- und Rechtsanwälte PartG mbB

(57) **Abstract**

An optical assembly (1) for generating an output optical frequency comb (100), preferably with a flat amplitude spectrum, comprising:
a frequency comb generator (2) generating an input optical frequency comb (3),
a spectrally resolved amplitude control stage (8), the amplitude control stage (8) being arranged downstream of the frequency comb generator (2),
a nonlinear frequency conversion stage (10), the nonlinear frequency conversion stage (10) being arranged downstream of the amplitude control stage (8) and comprising an optical converter (11) having a second order optical nonlinearity property, the optical converter (11) being configured to change the spectrum of the optical frequency comb (3) using a second order optical nonlinearity process, and
an output point (13) downstream of the nonlinear frequency conversion stage (10), wherein the output optical frequency comb (100) is provided at the output point (13).

## Description

The disclosure relates to an optical assembly and to a method for generating an output optical frequency comb. More specifically, the disclosure relates to a so-called astro-comb. An astro-comb is a frequency comb designed for calibrating astronomical spectrographs, i.e. spectrographs for astronomical applications. In the field of astro-combs, it is desired to obtain a frequency comb having a rather large mode distance, for example in the range from 15 to 30 GHz, as well as a broad spectrum of at least 100nm, preferably several 100nms. Sometimes it might be preferable to have a mode distance between 5 and 10 GHz for very high resolution spectrographs (R>100 000) or between 30 and 100 GHz for medium resolution spectrographs (R<50 000).

In general, optical frequency combs are defined as light having a plurality of equally spaced modes fₘ in the optical frequency domain, these modes being characterized by the formula fₘ=f_{CEO}+m*fᵣ with m being a natural number, f_{CEO} being the offset frequency of the frequency comb, and fᵣ being the mode distance between adjacent modes in the frequency domain. Optical frequency combs may be generated, for example, using mode-locked lasers (femtosecond lasers, oscillators), or using continuous wave (CW) lasers, where subsequently optical side bands are generated using an electro-optical modulator (EOM), or using a micro-resonator frequency comb source. Optical frequency combs are, for example, used in spectroscopy or in precise frequency measurements, in particular in optical clocks, or in spectrograph calibration.

In the context of the present invention, an optical frequency comb is further defined by comprising at least a precise knowledge and/or stabilization of the mode distance fᵣ. In addition, the frequency comb may optionally have a stabilization of its offset frequency f_{CEO}, or it may have a zero offset frequency, i.e. f_{CEO}=0. Ways of stabilizing an optical frequency comb are known e.g. from DE19911103A1 and DE 10044404A1, which are hereby incorporated by reference regarding specifics of the stabilization of a frequency comb. Frequency combs with zero offset are know from US6724788B1. These prior art documents describe techniques for stabilizing an optical frequency comb by acting on the optical resonator of the frequency comb generator in order to stabilize the mode distance fᵣ (also called repetition frequency or repetition rate in the case of mode-locked lasers) and the offset frequency f_{CEO} for providing a stable frequency comb.

Optical frequency combs generated by mode locked femtosecond lasers typically have repetition frequencies in the range of 100 MHz to 1 GHz generating frequency combs with a mode distance between 100 MHz and 1 GHz. This is typically too low and filter cavities can be used to filter out unwanted modes and thereby increase the mode distance to the required value, e.g. 15 to 30 GHz.

Optical frequency combs based on micro-resonators, so-called "microcombs", are known e.g. from US7982944B2, or from the scientific publications Kippenberg et al., "Microresonator-Based Optical Frequency Combs", Science (2011) 332, 6029, 555. In the context of the present invention, microcombs serve as a convenient and preferred way of directly generating frequency combs having a rather large mode distance, for example in the range from 15 to 30 GHz.

Since Astro-combs are used for calibrating spectrographs that typically use CCD arrays as detectors, it is important not to saturate a few detector pixels with a few strong comb modes. Instead, it is preferable to have the all frequency comb modes used for calibration at approximately the same optical power.

The scientific publication Gao et al., "Supercontinuum-tailoring multicolor imaging reveals spatiotemporal dynamics of heterogeneous tumor evolution", Nature Communications (2024) 15:9313 discloses possibilities for spectral broadening and adaptive phase shaping using a spatial light modulator (SLM) for pulse compression. Ludwig et al., "Ultraviolet astronomical spectrograph calibration with laser frequency combs from nanophotonic lithium niobate waveguides", Nature Communications (2024) 15:7614 11 discloses chip-based (LiNbO3) ultraviolet astro-combs without any spectral amplitude shaping. Cheng et al., "Continuous ultraviolet to blue-green astrocomb", Nature Communications (2024) 15:1466 8 discloses means for amplitude shaping and spectral flattening.

A variety of different optical assembly for various purposes are known from the following publications:
Wilken et al., "A spectrograph for exoplanet observations calibrated at the centimetre-per-second level", 614 NATURE VOL 485, May 31, 2012;
Udem et al., "Durchkämmte Spektren", Physik Journal 11 (2012) Nr. 7;
Steinmetz et al., "Laser Frequency Combs for Astronomical Observations", DOI: 10.1126/science.1161030 Science 321, 1335 (2008);
Probst et al., "Spectrally Flattened, Broadband Astronomical Frequency Combs", CLEO:2015, OSA 2015;
Probst et al., "Spectral flattening of supercontinua with a spatial light Modulator", Proc. of SPIE Vol. 8864 88641Z-8;
Probst et al., "Relative stability of two laser frequency combs for routine operation on HARPS and FOCES", Proc. of SPIE Vol. 9908 990864-16; or
Probst et al., "A compact echelle spectrograph for characterization of astro-combs", Appl. Phys. B (2017) 123:76 DOI 10.1007/s00340-016-6628-0.

In contrast to efforts for minimizing the duration of optical pulses, the objective of the present invention is to obtain a frequency comb being suitable for use as an astro-comb. Preferably, the frequency comb would be very robust, would have a rather "flat" power spectrum (i.e. rather homogenous power per optical mode over a large optical bandwidth) and would only require a little, if any, maintenance.

This objective is solved by an optical frequency having the features of claim 1, or by a method having the features of claim 10, respectively. Advantageous embodiments of the invention are referred to in the dependent claims.

In a first aspect, the disclosure relates to an optical assembly for generating an output optical frequency comb, comprising: a frequency comb generator generating an input optical frequency comb, a spectrally resolved amplitude control stage, the amplitude control stage being arranged downstream of the frequency comb generator, a nonlinear frequency conversion stage, the nonlinear frequency conversion stage being arranged downstream of the amplitude control stage and comprising an optical converter having a second order optical nonlinear property, the optical converter being configured to change the spectrum of the optical frequency comb using a second order optical nonlinear process, as well as an output point downstream of the nonlinear frequency conversion stage, wherein the output optical frequency comb is provided at the output point.

In this optical assembly, the non-linear frequency conversion stage changes the spectrum of an optical frequency comb by making use of a second order optical non-linearity. Using a process based on this second order optical non-linearity, the frequencies of the optical comb may be shifted, for example frequency doubled. This allows the frequencies to be shifted to shorter wavelengths. This shifting of the wavelengths yields an output optical frequency comb having a spectral range extending into the "blue" optical range, or even into the ultraviolet (UV) range, when starting in the red or near IR spectral range. For example, the output optical frequency comb may have wavelengths down to 380nm or even down to 350nm. A stable optical frequency comb in the blue or UV range is particularly useful for astronomic applications.

Often, processes involving a second order non-linearity are not homogenous, but exhibit some degree of spectral inhomogeneity, i.e., the shape of the output spectrum deviates from that of the input spectrum and might be strongly structured. As explained in the article of Cheng et al. identified above, the conventional approach to nevertheless achieve a spectrum with somewhat homogenous optical power was to install a spatial light modulator (SLM) downstream of a second harmonic generation stage, in order to allow for "active spectral flattening", i.e. obtaining a somewhat homogenous power distribution.

The present invention deviates from such conventional approaches by providing a spectrally resolved amplitude control stage upstream of the (second order) non-linear frequency conversion stage. This approach has several unexpected advantages. Firstly, arranging the spectrally resolved amplitude control stage upstream of the non-linear frequency conversion stage allows to feed the amplitude control stage with an input optical frequency comb in the red or (near) infrared spectrum, instead of feeding the amplitude control stage with a frequency comb centered in the blue or UV spectral range. In the red or (near) IR range, the optical components of the amplitude control stage are more affordable, more stable and, hence, more reliable. As a second advantage, the arrangement allows to feed the spectrally resolved amplitude control stage with an input optical frequency comb having a very broad spectral range - finally leading to a (frequency converted) output optical frequency comb, where each spectral component of the input optical frequency comb has been converted.. Thirdly, if it is desired to even further expand the spectrum of the output optical frequency comb, the present invention allows to do so by broadening of the input optical frequency comb, in contrast to broadening the spectrum of the output optical frequency comb itself. This avoids the necessity to carry out third order optical non-linear processes - so-called χ(3) processes - in the blue or ultraviolet range, where the involved materials suffer from extremely short lifetimes, and carrying out such processes in this spectral range is preferably avoided altogether. Instead, these processes can be carried out in the read or near infrared range, where less optical loss occur and the optical components are less prone to being damaged. And finally, the invention offers the significant advantage of providing an output optical frequency comb having any desired, in particular "flat", power distribution of its optical modes, this power distribution being controlled by the amplitude control stage. If the spectrograph to be calibrated has a non-flat response function the output optical frequency comb can have a pre-shaped power distribution in order to mimic a flat response on the spectrograph camera.

Specifically, the amplitude control stage can be designed to - dynamically or statically - control the power of certain modes prior to their frequency conversion such that, after the non-linear frequency conversion, the resulting modes have identical power. With "homogenous/identical power" or a "flat" power spectrum, it is meant that over a certain optical range of e.g. at least 100nm, preferably at least 200nm, or over the FWHM of the optical frequency comb, the power spectrum of the output optical frequency comb may have an amplitude (i.e. a variation) of less than 5dB, preferably less than 3dB, even more preferred less than 1dB, even more preferred less than 0,5dB, and even more preferred less than 0,1dB.

As a result, the output optical frequency comb provided by the optical assembly of the present invention is particularly suitable for use as an astro-comb. For example, the output optical frequency comb may have a spectral range extending into or being in the blue and UV spectral range, may have a high homogeneity in terms of optical power per mode.

Preferably, the second order optical non-linearity process comprises second harmonic generation (SHG). This process has a high efficiency. Second harmonic generation, in the context of optical frequency combs, refers to the process where each comb mode in the optical spectrum is doubled in frequency through the second order optical non-linearity process. It further involves mixing of each distinct comb mode with all other comb modes through sum frequency generation, resulting in the frequency-doubled spectrum.

SHG processes require precisely meeting certain phase matching conditions in order to be efficient. Moreover, processes involving a second order optical non-linearity, i.e. so-called χ(2) processes, often exhibit some degree of spectral inhomogeneity.

Preferably, the second order optical non-linearity process used in the non-linearity frequency conversion stage comprises a broadband means of second harmonic generation, for example, achromatic second harmonic generation, in short: aSHG. Such an achromatic second harmonic generation process may use an optical converter such as a non-linear crystal, for example a BBO crystal or a LBO crystal. A spectral disperser such as a grating or prism pair is used to angularly disperse the modes of a light pulse in such a way that each mode (or frequency component) reaches the non-linear crystal while meeting its individual phase matching angle. Downstream of the non-linear crystal, the modes are combined again by a spectral condenser, for example another grating or prism (pair). Such an achromatic second harmonic generation process (aSHG) has the advantage of simultaneously frequency doubling a very high number of modes of an optical frequency comb, without requiring any moving parts, and without introducing any time delay or chirp. Nevertheless, other (less preferable) techniques using a second order optical non-linearity may be used to achieve the desired output spectrum, such as scanning SHG, in which a non-linear crystal is rotated in order to sequentially fulfill phase-matching conditions for several optical frequencies.

Preferably, the input optical frequency comb has a (broad) spectral width (FWHM) of at least 20nm, preferably of at least 50nm, even more preferably of at least 100nm, and even more preferred of at least 200nm. Such a rather broad spectral width ensures that even after the non-linear frequency conversion stage, the remaining spectral width is still broad enough to make the output optical frequency comb usable for e.g. astronomical applications.

The frequency comb generator may comprise only a frequency comb source, or a frequency comb source and a spectral broadening stage. The spectral broadening stage has the advantage of broadening the spectral width of the frequency comb, for example using non-linear optical processes, so that the input optical frequency comb provided by the frequency comb generator has a very broad optical spectrum. Moreover, using a spectral broadening stage in addition to the frequency comb source itself offers the advantage of being able to tune the spectrum of the input optical frequency comb by suitably controlling the spectral broadening stage. In doing so, no adjustment of the frequency comb source itself is necessary, which reduces the requirements on stabilization of the frequency comb generator.

As a specific example, the spectral broadening stage may be configured to broaden the spectrum of the optical frequency comb using a second optical converter having a third order optical non-linearity property. Hence, this optical converter may carry out a so-called χ(3) process, such as supercontinuum generation (SCG).

The optical assembly may also use techniques for spectral broadening of an optical frequency comb as disclosed in European patent application EP24174414.3. These techniques enable the generation of a supercontinuum from an input optical frequency comb, namely by feeding the frequency comb into a waveguide structure which comprises a down-taper transition section leading to a taper waist section with a rather small, reduced cross-sectional diameter, followed by an up-taper transition section, in which the cross-sectional dimension increases, wherein an input section of the waveguide structure has an anomalous dispersion regime and at least a normal dispersion regime, and the taper waist section is configured to have a normal dispersion regime over a wavelength range critical for the supercontinuum generation. Regarding the various techniques for providing a supercontinuum generation, the entire disclosure of European patent application EP24174414.3 is hereby incorporated in its entirety.

Alternatively, a further possibility for the spectral broadening stage is to use cascaded χ(2) and χ(3) non-linear optical processes.

In particularly advantageous embodiments, the optical assembly further comprises a feedback loop for controlling the amplitude control stage based on a property of the output optical frequency comb. For this purpose, a detector may be provided for detecting or measuring one or several properties of the output optical frequency comb. For example, the detector may be configured to measure a power spectrum of the output optical frequency comb, i.e. a distribution of the optical power for a number of optical modes of the output optical frequency comb (commonly referred to as power spectral density, i.e. power per spectral unit). Throughout this text, "amplitude control" relates to the amplitude control stage acting on the spectrum of the optical frequency comb based on the detected property (for example, the power spectrum). The feedback loop is configured to use the detected property (or properties) of the output optical frequency comb for suitably controlling the amplitude control stage.

This property can be a flat spectrum or a spectrum following a certain spectral variation, mapping detector sensitivity. This spectrum can be recorded using a calibrated combination of grating and line camera, sometimes referred to as Czerny-Turner spectrometers. It is important to note that typical spectrometers of this kind have a resolution of 0,1 nm to 1 nm and can therefore usually not resolve single comb modes. For this reason, in the field of astro-combs, it is desired to obtain a frequency comb having a rather large mode distance, for example in the range from 15 to 30 GHz.

For example, the feedback loop may be configured to control the amplitude control stage with the aim or target to decrease or minimize a power variation of a power spectrum of the output optical frequency comb over at least a predetermined frequency range of the output optical frequency comb. In this scenario, the feedback loop is configured to ensure that the optical assembly is an output optical frequency comb with a rather flat power spectrum, i.e. with minimized variations of the optical power of the modes over the predetermined frequency range. Optical frequency combs with such a flat power spectrum are highly advantageous for astronomical applications, i.e. for use as an astro-comb. If the feedback loop detects that certain modes of the output optical frequency comb have a significantly higher power than a certain threshold, or than an average of the powers over the frequency range, the feedback loop may control the amplitude control stage to reduce the power of the respective modes prior to frequency conversion such that after the frequency conversion stage, the optical modes obtain the desired, reduced optical power. Conversely, if the frequency loop determines that a certain optical mode has an optical power which is lower than a predetermined threshold, or is significantly lower than the average power over the predetermined frequency spectrum, the feedback loop may control the amplitude control stage to increase the power of the respective mode accordingly. For example, the feedback loop may be configured to control the amplitude control stage so that the resulting power variation is smaller than 5dB, preferably less than 3dB, even more preferred less than 1dB, even more preferred less than 0,5dB, and even more preferred less than 0,1dB across the spectral range of the optical frequency comb.

The amplitude control stage may comprise a spatial light modulator, SLM, for example a liquid crystal on silicon spatial light modulator (LCOS SLM), or a MEMS based SLM. Such spatial light modulators have the advantage of being robust, of being affordable for the desired frequency range in the red/infrared spectrum, and of being precisely controllable, for example via the above-mentioned feedback loop. The SLM may be configured to act as an amplitude modulator, or as a phase modulator.

The optical assembly may comprise a spectral disperser (for example, a prism pair, or a grating, or grating pair) and a spectral condenser (for example, a second prism pair), wherein both the spectrally resolved amplitude control stage and the optical converter of the non-linear frequency conversion stage are arranged on an optical path between the spectral disperser and the spectral condenser. Such an arrangement has the advantage of providing a very compact structure of the optical assembly. Moreover, this arrangement has the advantage of reducing optical losses, because a single spectral dispersion stage may be used both for spatially distributing the optical modes for the amplitude control stage, and for spatially distributing the various optical modes prior to an achromatic second harmonic generation process, aSHG, in the non-linear frequency conversion stage.

In a second aspect, the disclosure relates to a method of generating an output optical frequency comb having desired optical properties. In this aspect, the method comprises the following steps: feeding the optical frequency comb into a spectrally resolved amplitude control stage arranged downstream of the frequency comb generator, feeding the optical frequency comb into a nonlinear frequency conversion stage being arranged downstream of the amplitude control stage, the nonlinear frequency conversion stage comprising an optical converter having a second order optical nonlinearity property, the optical converter changing the spectrum of the optical frequency comb using the second order optical nonlinearity property, and providing the output optical frequency comb at an output point downstream of the nonlinear frequency conversion stage.

This method offers advantages over conventional techniques corresponding to the advantages explained above with respect to the optical assembly.

Changing the spectrum of the optical frequency comb in the non-linear frequency conversion stage may comprise achromatic second harmonic generation, aSHG. The technique of achromatic (or broadband) SHG is particularly robust, as it does not require the use of any moving components. The non-linear frequency conversion stage may employ a non-linear optical crystal, for example comprising BBO material.

Optionally, the method may further comprise a step of broadening a spectrum of the optical frequency comb using a second optical converter having a third order optical non-linearity property, in particular involving supercontinuum generation. Alternatively or additionally, the second optical converter used for broadening the spectrum of the optical frequency comb may use a down-tapered and up-tapered waveguide structure such as those disclosed in European application EP24174414.3 incorporated herein in its entirety.

In advantageous embodiments, the method further comprises detecting at least one property of the output optical frequency comb, and controlling the amplitude control stage based on the at least one property of the output optical frequency comb. As a result, the method will yield an output optical frequency comb having specific, desired properties.

For example, the amplitude control stage may be controlled targeting to minimize a power variation of a power spectrum of the output optical frequency comb over at least a predetermined frequency range of the output optical frequency comb. As a result, the method is designed to obtain an output optical frequency comb having a rather flat, homogenous power spectrum. Such a flat power spectrum makes the output optical frequency comb ideal for astronomical applications. As already expressed above, the feedback loop may be configured to control the amplitude control stage so that the resulting power variation is less than 5dB, preferably less than 3dB, even more preferred less than 1dB, even more preferred less than 0,5dB, and even more preferred less than 0,1dB across the spectral range of the optical frequency comb.

The method may involve using one or several optical fibers for delivering the input optical frequency comb to the spectrally resolved amplitude control stage, for transmitting the optical frequency comb between the spectrally resolved amplitude control stage and the non-linear frequency conversion stage, and for receiving the output optical frequency comb at or downstream of the output point. The use of such optical fibers yields a very robust system, requiring hardly any maintenance or adjustments, if at all.

In a third aspect, the disclosure relates to a use of an optical assembly according to any of the variants described above, or to use of a method according to any of the variants described above, wherein the output frequency comb is guided towards a spectrograph, for example an astronomical spectrograph, and is used to calibrate said spectrograph, in particular in the green, blue and/or UV spectral range. The output frequency comb may be guided to the spectrograph using fiber-optics.

In further advantageous embodiments of the invention the output optical frequency comb can be further processed before feeding it via fiber to the spectrograph,

In the case that the fiber is a multimode fiber (e.g. with core diameters of 50 to 100 micrometer or even up to 1000 micrometer, circular, hexagonal or even octagonal in shape), a fiber scrambler can be placed in the optical path before the spectrograph. As a fiber scrambler an Ulbricht sphere can be used. Alternatively, the fiber can be manually actuated on as described in D. Phillips et al., "Calibration of an astrophysical spectrograph below 1 m/s using a laser frequency comb", OPTICS EXPRESS 13711, Vol. 20, No. 13, (2012), or as described in X. YI at al., "Demonstration of a near-IR line-referenced electro-optical laser frequency comb for precision radial velocity measurements in astronomy" "NATURE COMMUNICATIONS | 7:10436, DOI: 10.1038/ncomms10436 (2016). Yet another alternative is to use a passive scrambler by opening the fiber connection to the spectrograph and transforming the image of the fiber end into a pupil that is then injected into the subsequent fiber as described in Spronck et al. "Fiber Scrambling for High-Resolution Spectrographs", 2013 PASP, 125 511. Another very simple passive scrambling method is to tightly and frequently bend the optical fiber and thereby mixing different modes.

This serves to excite more modes of the multi-mode fiber and to thereby equalize the mode distribution.

Other fiber types to be used without mode scrambler are single mode fibers, especially those with a large spectral transmission range like so-called endlessly single mode photonic crystal, fibers or those with a big mode field diameter (LMA (large mode area) fibers). Single mode fibers can also be polarization conserving.

Another possible addition is a so-called distribution box, before the spectrograph, where light from different calibration sources can be switched towards the spectrograph. Such a switch box can be used to switch calibration light between an old-fashioned spectral lamp and an astro-comb.

Advantageous embodiments of the invention will now be described with respect to the drawings, in which:
Figure 1 shows a schematical view of an embodiment of an optical assembly of the present invention.
Figure 2 shows a first embodiment of the spectrally resolved amplitude control stage and the non-linear frequency conversion stage.
Figure 3 shows a second embodiment of the spectrally resolved amplitude control stage and the non-linear frequency conversion stage.
Figure 4 shows a third embodiment of the spectrally resolved amplitude control stage and the non-linear frequency conversion stage.
Figure 5 shows a fourth embodiment of the spectrally resolved amplitude control stage and the non-linear frequency conversion stage.
Figure 6 shows a fifth embodiment of the spectrally resolved amplitude control stage and the non-linear frequency conversion stage.
Figure 7 shows examples of a power spectrum of the output optical frequency comb.

Throughout the drawings, similar components are designated with identical reference numerals.

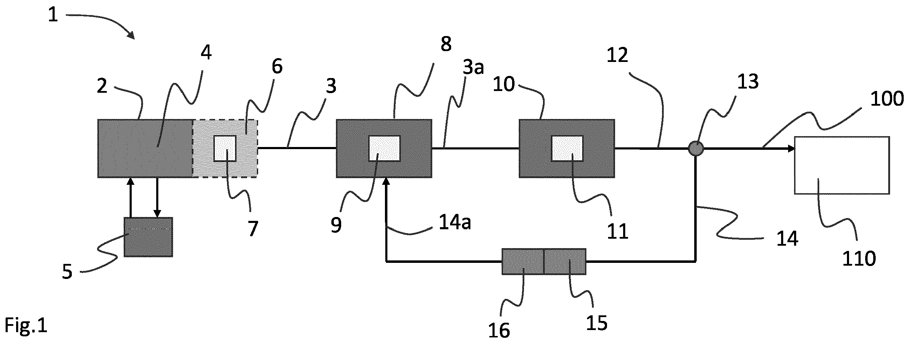

Figure 1 shows a schematical view of an embodiment of an optical assembly 1 of the present invention. The optical assembly 1 is configured for generating an output optical frequency comb 100.

The optical assembly comprises a frequency comb generator 2 which generates an input optical frequency comb 3. The frequency comb generator 2 comprises a frequency comb source 4, for example a mode-locked optical resonator, or an electro-optical frequency comb source, or a micro-resonator frequency comb source. The frequency comb generator 2 comprises a stabilizer 5 for stabilizing at least the mode-distance fᵣ of the generated frequency comb.

Optionally, the frequency comb generator 2 may also comprise a spectral broadening stage 6. The spectral broadening stage 6 is configured to broaden or expand the spectrum of the optical frequency comb provided by the frequency comb source 4. Broadening of the spectrum of the optical frequency comb may be achieved by the spectral broadening stage 6 comprising an optical converter 7. The optical converter 7 may be a material having a third order optical non-linearity property, or χ(3) property. For example, the second optical converter 7 having a third order optical non-linear property may provide for supercontinuum generation. The optical converter 7 may also comprise a down-tapered and up-tapered waveguide structure such as disclosed in European application EP24174414.3 incorporated herein by reference regarding the techniques for supercontinuum generation.

An input optical frequency comb 3 is generated by the optical assembly 1. Along the path travelled by the input optical frequency comb 3, downstream of the frequency comb generator 2, the optical assembly 1 comprises a spectrally resolved amplitude control stage 8. The spectrally resolved amplitude control stage 8 is configured to control the power of various modes of the optical frequency comb 3. For this purpose, the amplitude control stage 8 may, for instance, comprise a spatial light modulator 9, SLM. Optionally, the SLM may be configured as a liquid crystal on silicon spatial light modulator (LCOS SLM). The amplitude control stage 8 yields an amplitude controlled optical frequency comb 3a.

Downstream of the amplitude control stage 8, the optical assembly 1 comprises a non-linear frequency conversion stage 10. The non-linear frequency conversion stage 10 comprises an optical converter 11 having a second order optical non-linearity property. Using a second order optical non-linearity process, i.e. a so-called χ(2) process, the optical converter 11 is configured to change the spectrum of the amplitude-controlled optical frequency comb 3a. For example, the optical converter 11 may be configured to carry out second harmonic generation, SHG, thereby doubling the frequency of each of the various modes of the optical frequency comb 3a. More specifically, as will be described later, the non-linear frequency conversion stage 10 may be designed to carry out broadband or achromatic SHG, in short: aSHG.

As a result, the non-linear frequency conversion stage 11 generates a frequency-converted, for example frequency-shifted, even more specifically frequency-doubled optical frequency comb 12. Directly, or after being subjected to further modifications, this optical frequency comb is provided as the output optical frequency comb 100 at an output point 13 of the optical assembly 1.

As further shown in Figure 1, the optical assembly 1 may comprise a feedback loop 14. The feedback loop 14 is configured for controlling the amplitude control stage 8 based on a property of the output optical frequency comb 100. For this purpose, the feedback loop 14 comprises a detector 15 measuring or detecting at least one property of the output optical frequency comb 100. For example, the detector 15 may be a one-dimensional or two-dimensional sensor assembly configured to measure the optical power of individual modes of the output optical frequency comb 100, for example by using a spectrally resolved or scanning technique.

In addition to the detector 15, the feedback loop 14 in this example comprises a controller 16, for example a microcontroller or computer, suitably programmed for converting values received by the detector 15 into control signals 14a for controlling the amplitude control stage 8. Preferably, the feedback loop 14 is configured to control the amplitude control stage 8 with the purpose to decrease or minimize a power variation of a power spectrum of the output optical frequency comb 100. This minimization of the power variation may be carried out over at least a predetermined frequency range of the output optical frequency comb 100. As a result of this feedback, the output optical frequency comb 100 may be provided with a very flat, homogenous power spectrum, exhibiting only small, if any, variations of the optical power in the frequency domain.

In each embodiment, as shown in Figure 1, the output optical frequency comb 100 may be guided (e.g. using fiber-optics) to a spectrograph 110, for example an astronomical spectrograph 110. Due to its unique properties, the output optical frequency comb 100 may then be used to calibrate the spectrograph 110, in particular in the green, blue and/or UV spectral range.

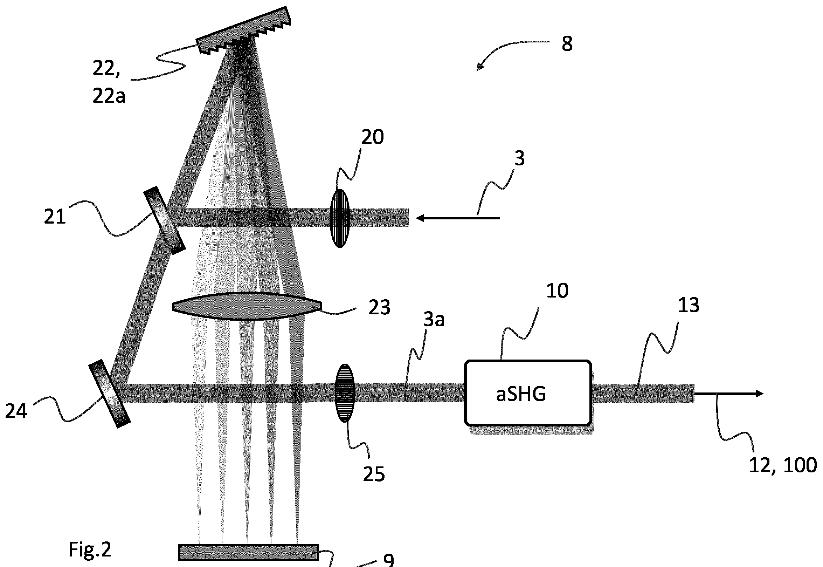

Figure 2 shows a specific embodiment of the spectrally resolved amplitude control stage 8 and the non-linear frequency conversion stage 10 of the optical assembly 1. The input optical frequency comb 3 generated by the frequency comb generator 2 is fed into the spectrally resolved amplitude control stage 8. The input optical frequency comb 3 at this stage has a spectrum in the red or (near) infrared optical range. The amplitude control stage 8 comprises an input polarizer 20 followed by a polarizing beam splitter or beam steering mirror 21 directing the optical frequency comb 3 onto a disperser 22, in particular an optical grating 22a. The disperser 22, as indicated, disperses the various modes of the optical frequency comb 3 spatially so that they travel in different angular directions.

A focusing optics 23 focuses the modes onto individual pixels or elements of a spatial light modulator 9, in short: SLM, for example an LCOS SLM 9. The SLM 9 is controlled - e.g. via the feedback loop 14 - to individually adjust the amplitude of each mode of the input optical frequency comb 3, thereby converting the frequency comb 3 into an amplitude-controlled optical frequency comb 3a. In the embodiment shown in Fig. 2, the SLM 9 works in reflective mode. On their return path, the modes of the comb 100 are condensed by the disperser 22 (now acting as a spectral condenser) before optionally travelling across one or several mirrors 24, before exiting the amplitude control stage 8 at an output polarizer 25. The output polarizer 25 may be arranged at a polarizing angle of 90° with respect to the input polarizer 20. Hence, transmission of an individual mode through the amplitude control stage 8 is maximized if its polarization is rotated by 90° on its transit through the amplitude control stage 8, in particular by the SLM 9.

Downstream of the amplitude control stage 8, the optical assembly 1 comprises the non-linear frequency conversion stage 10. In this embodiment, the non-linear frequency conversion stage 10 may be configured to shift the spectrum of the optical frequency comb 3a by means of achromatic second harmonic generation, aSHG. Downstream of the non-linear frequency conversion stage 10, the optical assembly 1 provides the output optical frequency comb 12, 100 at the output point 13.

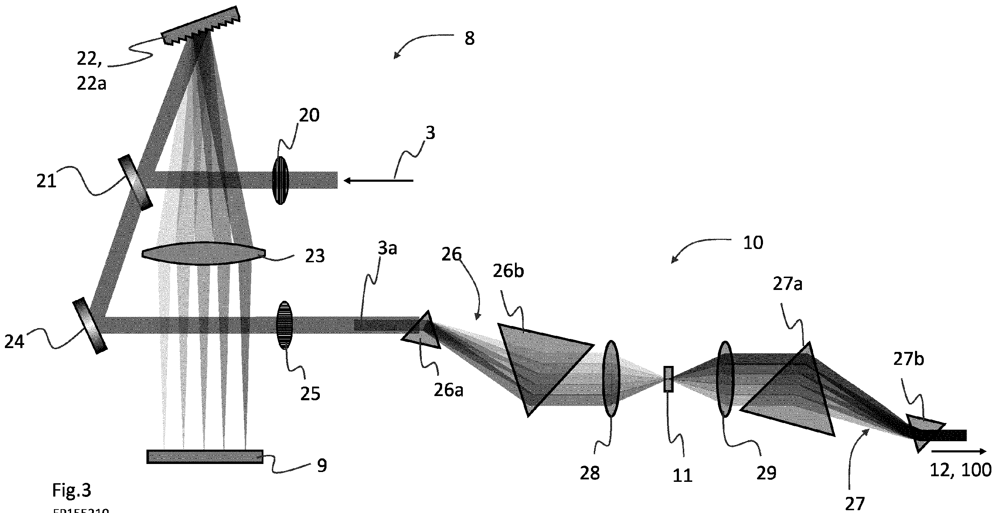

Figure 3 shows a similar schematic view as in Figure 2, again showing of parts of the optical assembly 1, but with further details of the non-linear frequency conversion stage 10. In this embodiment, the non-linear frequency conversion stage 10 is configured to carry out achromatic SHG, aSHG. For this purpose, the non-linear frequency conversion stage 10 comprises the optical converter 11, in particular a non-linear optical crystal, for example a BBO crystal. Upstream of the non-linear crystal 11, the optical assembly 1 comprises a spectral disperser 26. In this embodiment, the spectral disperser 26 comprises a prism pair having a first prism 26a and a second prism 26b. The spectral disperser 26 spatially disperses the modes of the optical frequency comb 3a. Downstream of the non-linear crystal 11, the optical assembly 1 comprises a spectral condenser 27. The spectral condenser 27, in this embodiment, comprises a second prism pair having a third prism 27a and a fourth prism 27b. The spectral condenser 27 is configured to spatially condense the optical modes of the frequency comb 100 onto a common path.

The optical converter 11, i.e. the non-linear crystal 11, is arranged between the spectral disperser 26 and the spectral condenser 27. More specifically, the optical converter 11 is arranged between focusing optics 28 and condensing optics 29. The focusing and condensing optics 28, 29 are configured and arranged such that each mode of the optical frequency comb 100 reaches the optical converter 11 such that its individual phase matching condition is fulfilled to the best possible degree. Hence, the optical converter 11 is able to change the frequency of the optical comb using aSHG with high efficiency. As a result, the optical assembly 1 generates an output optical frequency comb 12, 100 with a spectrum e.g. in the green to ultraviolet spectral range, ideally comprising wavelengths down to 380nm or even down to 350 nm.

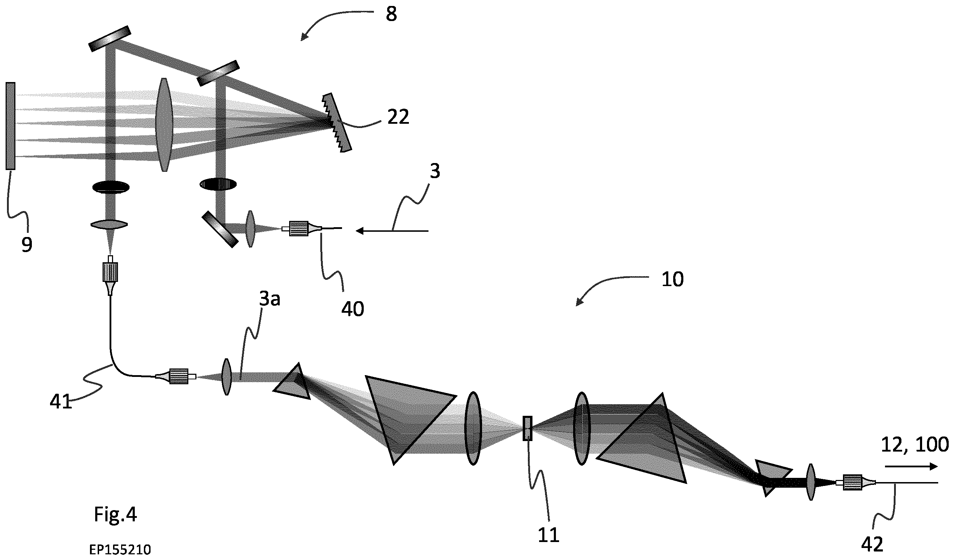

Figure 4 shows a similar arrangement of the optical assembly 1 as shown in Figure 3. Instead of using free-space optics as in Figure 3, however, the variant of the optical assembly 1 shown in Figure 4 uses fiber optics, including a first optical fiber 40 arranged for delivering the input optical frequency comb 3 to the amplitude control stage 8, a second optical fiber 41 arranged downstream of the amplitude control stage 8 and upstream of the non-linear frequency conversion stage 10, and/or a third optical fiber 42 arranged for receiving the output optical frequency comb 12, 100 downstream of the non-linear frequency conversion stage 10. Only some, all, or none of these optical fibers 40, 41, 42 may be present in the optical assembly 1.

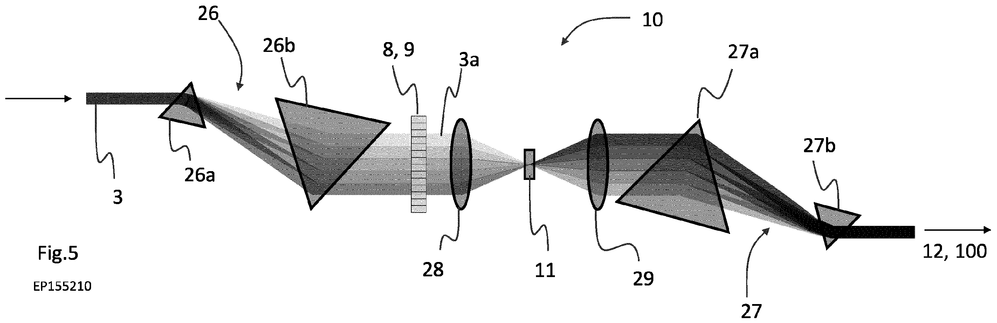

Figure 5 shows another embodiment of the optical assembly 1. In this embodiment, the spatial light modulator, SLM 9, of the amplitude control stage 8 as well as the optical converter 11 of the non-linear frequency conversion stage 10 are both arranged in an optical path between a spectral disperser 26 and a spectral condenser 27. Similar to the arrangements shown in Fig-ures 3 and 4, the spectral disperser 26 may comprise a pair of prisms 26a, 26b, while the spectral condenser 27 may comprise a second pair of prisms 27a, 27b. In contrast to the arrangements shown in Figures 3 and 4, however, the spatial light modulator 9 of the amplitude control stage 8 is arranged downstream of the spectral disperser 26. Specifically, in this embodiment, the SLM 9 is arranged between the spectral disperser 26 and the focusing optics 28 which focus the optical frequency comb into the frequency converter 11. Advantageously, this arrangement avoids the necessity for another spectral disperser such as the optical grating 22 in the embodiments of the Figures 2 to 4. As a result, the arrangement of the optical assembly 1 of Figure 5 can be built more compact than the one of Figures 2 to 4.

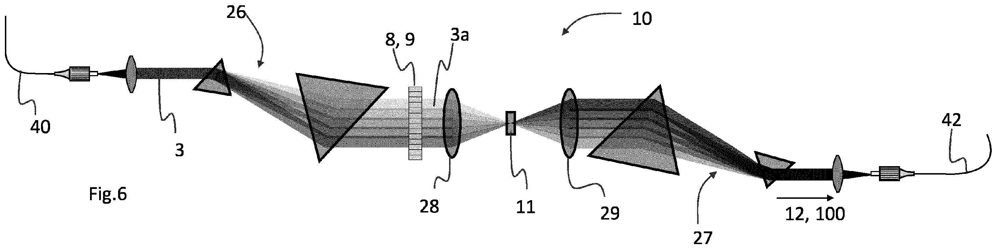

Figure 6 shows a variant of the optical assembly 1 corresponding to the one of Figure 5, except for using fiber optics instead of free-space optics. In particular, the embodiment of Figure 6 comprises a first optical fiber 40 for delivering the input optical frequency comb 3, and/or a second optical fiber 42 for receiving the frequency converted output optical frequency comb 12, 100 downstream of the non-linear frequency conversion stage 10, at or downstream of the output point 13.

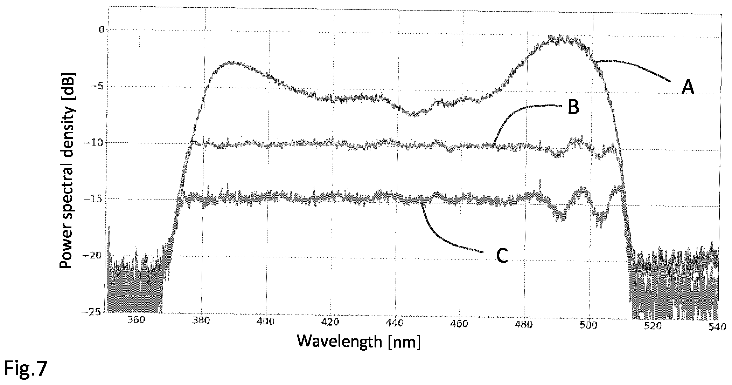

Figure 7 is a diagram illustrating the effect of the spectrally resolved amplitude control stage 8, in particular with respect to "flattening" the power spectrum of the output optical frequency comb 100. Specifically, Figure 7 shows the power spectral density on a logarithmic scale (related to the amplitude, measured in [dB]) versus the wavelength (in nanometers [nm]) of the output optical frequency comb 100. As immediately evident, the spectrum of the output optical frequency comb 100 extends from the ultraviolet range into the green range of the optical spectrum. In general, the spectrum of the output optical frequency comb 100 in the embodiment shown in Figure 7 extends from about 375nm to about 510nm. This spectral range is achieved by frequency shifting, e.g. frequency doubling (via SHG, or aSHG), the modes of an input optical frequency comb in the red/near infrared range ranging from 750 to 1020nm.

In Figure 7, the top curve A shows the power spectrum of the output optical frequency comb 100 in an inactive state of the amplitude control stage 8, or in the absence of an amplitude control stage 8. The power spectrum A exhibits significant inhomogeneities. In particular, the power of optical modes between 380nm and 510nm varies significantly by about 7dB.

In contrast, the central curve B shows the power spectrum of the output optical frequency comb 12, 100 of the present invention after suitably controlling the amplitude control stage 8. In particular, the amplitude control stage 8 in this scenario is controlled with the aim to minimize a power variation of the power spectrum of the output optical frequency comb 100. In the predetermined frequency range, in this example from about 375nm to about 508nm, the power of individual modes of the frequency comb have a variation of less than 5%, or less than about 1.5dB, respectively. Hence, the power spectrum B is the desired power spectrum of a flat output optical frequency comb 100.

The lower curve B shows the output power spectrum in another control mode of the spectrally resolved amplitude control stage 8. In this scenario, the power spectrum of the output optical frequency comb 100 has been *"flattened"* at a lower level, in the interest of having a flat power spectrum over an even broader range than in scenario B.

In operation of the optical assembly 1, the method of the present invention comprises generating an input optical frequency comb 3 by the frequency comb generator 2. Optionally, the input optical frequency comb may be obtained by broadening the spectrum of an original optical frequency comb 3 generated by a frequency comb source 4, for example using supercontinuum generation. The input optical frequency comb 3 is subsequently fed into a spectrally resolved amplitude control stage 8 arranged downstream of the frequency comb generator 2. The amplitude control stage 8 controls the power of individual modes of the optical frequency comb 3, before the amplitude-controlled frequency comb 3a is fed into a non-linear frequency conversion stage 10 arranged downstream of the amplitude control stage 8. Using a second order optical non-linear process, the non-linear frequency conversion stage 10 changes the spectrum of the optical frequency 3, for example using SHG, in particular using aSHG. As a result, in particular when using a feedback loop 14 as described above, the method is able to generate an output optical frequency comb 100 having a particularly flat power spectrum.

Starting from any of the embodiments described above, the optical assembly 1 and the method for generating an output optical frequency comb 100 may be varied in several ways, for example regarding the components used, or regarding the individual wavelengths of the optical frequency comb 3, 100. For example, the invention may use an optical frequency comb 3, 100 having a zero offset frequency, f_{CEO} = 0. The feedback loop 14 may be an analog or a digital feedback loop 14. The feedback loop 14 may comprise a machine learning algorithm, artificial intelligence (Al), and/or a neural network configured to continually optimize the performance of the feedback loop 14. In an embodiment of the optical assembly 1 or the method without a feedback loop 14, the spatial light modulator 8 may be configured to operate statically, for example based on a previously obtained calibration curve. Instead of spectral flattening, as described above, the invention may further use arbitrary spectral shaping in order to obtain an optical frequency comb having an arbitrary power spectrum, e.g., where the spectral shaping is used in such a way as to suppress undesired wavelength regions, acting as a controllable spectral filter with reduced or minimized variation.

## Claims

1. Optical assembly (1) for generating an output optical frequency comb (100), comprising:
a frequency comb generator (2) generating an input optical frequency comb (3),
a spectrally resolved amplitude control stage (8), the amplitude control stage (8) being arranged downstream of the frequency comb generator (2),
a nonlinear frequency conversion stage (10), the nonlinear frequency conversion stage (10) being arranged downstream of the amplitude control stage (8) and comprising an optical converter (11) having a second order optical nonlinearity property, the optical converter (11) being configured to change the spectrum of the optical frequency comb (3a) using a second order optical nonlinearity process, and
an output point (13) downstream of the nonlinear frequency conversion stage (10),
wherein the output optical frequency comb (100) is provided at the output point (13).

2. Optical assembly according to claim 1, wherein the second order optical nonlinearity process comprises achromatic second harmonic generation, aSHG.

3. Optical assembly according to any of the preceding claims, the input optical frequency comb (3) has a spectral width (FWHM) of at least 20nm, preferably of at least 50nm, even more preferred of at least 100nm, even more preferred of at least 200nm.

4. Optical assembly according to any of the preceding claims, wherein the frequency comb generator (2) comprises a frequency comb source (4) and a spectral broadening stage (6).

5. Optical assembly according to claim 4, wherein the spectral broadening stage (6) is configured to broaden the spectrum of the optical frequency comb (3) using a second optical converter (7) having a third order optical nonlinearity property.

6. Optical assembly according to any of the preceding claims, further comprising a feedback loop (14) for controlling the amplitude control stage (8) based on a property of the output optical frequency comb (10).

7. Optical assembly according to any claim 6, wherein the feedback loop (14) is configured to control the amplitude control stage (8) with the aim to minimize a power variation of a power spectrum of the output optical frequency comb (100) over at least a predetermined frequency range of the output optical frequency comb (100).

8. Optical assembly according to any of the preceding claims, wherein the amplitude control stage (8) comprises a spatial light modulator, SLM.

9. Optical assembly according to any of the preceding claims, wherein the optical assembly (1) comprises a spectral disperser (26) and a spectral condenser (27), wherein both the spectrally resolved amplitude control stage (8) and the optical converter (11) of the non-linear frequency conversion stage (10) are arranged on an optical path between the spectral disperser (26) and the spectral condenser (27).

10. Method of generating an output optical frequency comb (100), the method comprising the following steps:
generating an input optical frequency comb (3) by a frequency comb generator (2),
feeding the optical frequency comb (3) into a spectrally resolved amplitude control stage (8) arranged downstream of the frequency comb generator (2),
feeding the optical frequency comb (3) into a nonlinear frequency conversion stage (10) being arranged downstream of the amplitude control stage (8), the nonlinear frequency conversion stage (10) comprising an optical converter (11) having a second order optical nonlinearity property, the optical converter (11) changing the spectrum of the optical frequency comb (3) using the second order optical nonlinearity property, and
providing the output optical frequency comb (100) at an output point (13) downstream of the nonlinear frequency conversion stage (10).

11. Method according to claim 10, wherein changing the spectrum of the optical frequency comb (3) in the nonlinear frequency conversion stage (10) comprises achromatic second harmonic generation, aSHG.

12. Method according to any of claims 10 or 11, further comprising broadening a spectrum of the optical frequency comb (3) using a second optical converter (7) having a third order optical nonlinearity property, in particular involving supercontinuum generation.

13. Method according to any of claims, further comprising detecting a property of the output optical frequency comb (100), and controlling the amplitude control stage (8) based on the property of the output optical frequency comb (100),
wherein preferably the amplitude control stage (8) is controlled targeting to minimise a power variation of a power spectrum of the output optical frequency comb (100) over at least a predetermined frequency range of the output optical frequency comb (100).

14. Method according to any of claims 10 to 13, wherein one or several optical fibers (40, 41 ,42) are used for delivering the optical frequency comb (3) to the spectrally resolved amplitude control stage (8), for transmitting the optical frequency comb (3) between the spectrally resolved amplitude control stage (8) and the nonlinear frequency conversion stage (10), and/or for receiving the output optical frequency comb (100) at or downstream of the output point (13).

15. Use of an optical assembly (1) according to any of claims 1 to 9, or use of a method according to any of claims 10 to 14, wherein the output frequency comb (100) is guided towards a spectrograph (110), and is used to calibrate said spectrograph (110), in particular in the green, blue and/or UV spectral range.
